# EUROPEAN PATENT SPECIFICATION

(11) **EP 4 687 600 B1**
(45) Date of publication and mention of the grant of the patent: **25.11.2026**
(21) Application number: 23789734.3
(22) Date of filing: 15.09.2023
(51) Int. Cl.: A47J 43/08

(54) **A MAIN UNIT AND A FOOD PROCESSOR**
EINE HAUPTEINHEIT UND EINE LEBENSMITTELVERARBEITUNGSMASCHINE
UNITÉ PRINCIPALE ET UN ROBOT CULINAIRE

(30) Priority: 31.03.2023 CN 202310353753; 17.04.2023 CN 202310423836; 17.04.2023 CN 202320856306 U
(43) Date of publication of application: 11.02.2026
(73) Proprietor: Zhejiang Shaoxing Supor Domestic Electrical Appliance Co., Ltd., Shaoxing Zhejiang 312071 (CN)
(72) Inventor: NIU, Xihao, Shaoxing, Zhejiang 312071 (CN)
(74) Representative: LLR
(86) International application number: PCT/IB2023/059167
(87) International publication number: WO 2024/201131

(56) References cited:
- US-A- 5 074 201
- US-A1- 2014 116 262
- US-A1- 2023 055 385
- US-B2- 9 603 490

## Description

### Field of the Invention

The present invention relates to the field of food processing, and in particular, to a main unit and a food processor.

### Background of the Invention

As people's life quality keeps improving, many different types of food processors have emerged in the market. Functions of a food processor can mainly include, but are not limited to: making soy milk, juicing, grinding meat, making shaved ice, making coffee, and/or preparing face masks, etc. Food processors can include machines that cut and mix food, such as soy milk makers, blenders, or meat grinders. Existing food processors only provide food cutting function, and once a food material is cut, they cannot further stir the food material until it becomes uniform. US 9 603 490 B2 discloses a hand blender with a built-in 2-speed gearbox. Indeed, US 9 603 490 B2 discloses a main unit of a food processor comprising:
- a housing;
- a motor arranged inside the housing and comprising a motor shaft; and
- a speed-changing device arranged inside the housing and comprising an input frame, a shifting element, a high-speed driving component, a low-speed driving component, and a gear assembly; the motor shaft driving the input frame to rotate forward or backward, the shifting element being movable in a first direction or a second direction where it is respectively engaged with the input frame; the gear assembly comprising a gear ring, an output carrier, a first sun gear, and a first planet gear arranged on the output carrier; the high-speed driving component being engaged with the output carrier, the first sun gear being fixed to the motor shaft, the first planet gear being engaged with the first sun gear and the gear ring; wherein, when the input frame rotates forward, the shifting element moves in the first direction where it engages with the high-speed driving component, and the high-speed driving component drives the output frame to rotate; when the input frame rotates backward, the shifting element moves in the second position where it engages with the low-speed driving component, thereby causing the output frame to rotate together with the first planet gear. US 2023/055385 A1 discloses a juicer and blender-compatible power device in which the rotating shafts rotate at different speeds.

### Summary of the Invention

An objective of the present invention is to provide a main unit and food processor capable of both cutting a food material and stirring the food material.

An aspect of the present invention provides a main unit according to claim 1.

When the input frame rotates forward, the output carrier drives a rotating tool assembly to rotate at a high speed, at which moment a food material can be cut; when the input frame rotates backward, the output carrier drives the rotating tool assembly to rotate at a lower speed, at which moment a cut food material can be stirred or other functions such as making dough can be realized. Thus, the food processor can better meet a user's needs. In addition, when the motor rotates forward or backward, automatic switching between a high speed and a low speed can be achieved by means of the speed-changing device under the effect of centrifugal force, so that the output speed is different depending on the rotation direction of the motor. According to the present invention, it is not necessary to use a control circuit or control chip in order to achieve the switching between high speed and low speed output. Therefore, it is not necessary to redesign a circuit, making the food processor easier to implement, and at a lower overall cost. The rotating tool assembly may be a blending knife assembly which is capable of cutting the food material into smaller pieces. Alternatively, he rotating tool assembly may comprise interchangeable tools, such as blending tool, mixing tool, shredding tool, beating tool, etc.

Further, the lifting mechanism comprises an inner screw thread arranged on the inner side of the input frame and an outer screw thread arranged on the outer side of the shifting element, wherein the inner screw thread cooperates with the outer screw thread. By the cooperation between the inner screw thread and the outer screw thread, the rotation of the input frame can cause the shifting element to ascend or descend, and the structure is simple and convenient to assemble.

Further, the shifting element comprises a high-speed stopper arranged at one end of the outer screw thread and a low-speed stopper arranged at the other end of the outer screw thread, while the input frame comprises a high-speed stop surface that correspondingly cooperates with the high-speed stopper and a low-speed stop surface that correspondingly cooperate with the low-speed stopper. When the input frame rotates forward, the shifting element descend s until the high-speed stopper abuts against the high-speed stopper surface, at which moment the input frame drives the shifting element to rotate forward together. When the input frame rotates backward, the shifting element ascends until the low-speed stopper abuts against the low-speed stopper surface, at which moment the input frame drives the shifting element to rotate backward together. In this way, the shifting element is switched between ascending and descending, and between opposite rotating directions.

Further, the input frame comprises a high-speed stopper groove and a stopper block arranged within the high-speed stopper groove, the high-speed stop surface being provided on the stopper block. During assembly, first, the shifting element is mounted into the input frame, then, the stopper block is mounted into the high-speed stopper groove. Thus, assembly is more convenient.

Further, the high-speed stopper groove is shaped as a cone with a larger top and a smaller bottom, the shape of the stopper block matching the shape of the high-speed stopper groove, wherein the stopper block is mounted into the high-speed stopper groove from the outer side of the input frame. Thus, the high-speed stopper groove can limit the position of the stopper block in the vertical direction, preventing the stopper block from detaching from the high-speed stopper groove under the effect of gravity.

Further, the input frame comprises a bearing arranged on the outer side of the stopper block. By means of the bearing, the position of the stopper block can be limited from the outer side of the stopper block, and the structure of the input frame is more stable and not prone to swinging.

Further, the lifting mechanism comprises a spiral groove arranged on the inner side of the input frame and a guide pin arranged on the outer side of the shifting element, wherein the guide pin can slide in the spiral groove. Alternatively, the lifting mechanism comprises a guide pin arranged on the inner side of the input frame and a spiral groove arranged on the outer side of the shifting element, wherein the guide pin can slide in the spiral groove. By the cooperation between the guide pin and the spiral groove, rotation of the input frame can cause the shifting element to ascend or descend, and the structure is simple and convenient to assemble.

Further, the low-speed driving component comprises a rotating shaft and a low-speed driving block, the first sun gear being fixed to the bottom end of the rotating shaft, and the low-speed driving block being fixed to the top end of the rotating shaft. Thus, the rotating shaft and the low-speed driving block are manufactured separately and then assembled together, which facilitates the manufacturing.

Further, the top end of the rotating shaft comprises a flat portion, and the low-speed driving block comprises a flat hole that cooperates with the flat portion. By means of the cooperation between the flat portion and the flat hole, the cooperation between the rotating shaft and the low-speed driving block is more stable, with no risk of relative rotation there between.

Further, the low-speed driving block comprises a low-speed driving protrusion, and the shifting element comprises a low-speed driving groove corresponding to the low-speed driving protrusion, wherein the shifting element and the low-speed driving block are engaged with each other through the cooperation of the low-speed driving protrusion and the low-speed driving groove. By the cooperation of the low-speed driving protrusion and the low-speed driving groove, the shifting element and the low-speed driving block can be engaged with each other more conveniently and stably.

Further, the high-speed driving component comprises a high-speed driving protrusion, and the shifting element comprises a high-speed driving groove corresponding to the high-speed driving protrusion, wherein the shifting element and the high-speed driving component are engaged with each other through the cooperation of the high-speed driving protrusion and the high-speed driving groove. By the cooperation of the high-speed driving protrusion and the high-speed driving groove, the shifting element and the high-speed driving component can be engaged with each other more conveniently and stably.

Further, the high-speed driving component comprises a downward extending clamping portion, and the output frame comprises a clamping slot corresponding to the clamping portion, wherein the clamping portion and the clamping slot cooperate with each other so that the output frame rotates together with the high-speed driving component. Thus, by the cooperation between the clamping portion and the clamping slot, the high-speed driving component can drive the output carrier to rotate together.

Further, the input frame is provided with a second sun gear and a second planet gear, the second sun gear being connected to the motor shaft, the second planet gear being engaged with the second sun gear and the gear ring, and the gear shaft of the second planet gear being fixed to the input frame. By providing the second sun gear and the second planet gear, the speed of the motor shaft of the motor is reduced and then transmitted to the input frame.

Another aspect of the present invention provides a food processor according to claim 14.

The rotating tool assembly may be a blending knife assembly which is capable of cutting the food material into smaller pieces. Alternatively, the rotating tool assembly may comprise interchangeable tools, such as blending tool, mixing tool, shredding tool, beating tool, etc.

Another aspect of the present invention provides a food processor according to claim 15.

### Description of the Drawings

Fig. 1 shows an exploded view in perspective of an embodiment of the food processor of the present invention;
Fig. 2 is an exploded view in perspective of the main unit shown in Fig. 1;
Fig. 3 is an exploded view in perspective of the speed-changing device shown in Fig. 2;
Fig. 4 is a longitudinal sectional view of the speed-changing device shown in Fig. 2, with the shifting element engaged with the high-speed driving component;
Fig. 5 is a sectional view along A-A shown in Fig. 4;
Fig. 6 is a longitudinal sectional view of the speed-changing device shown in Fig. 2, with the shifting element engaged with the low-speed driving component;
Fig. 7 is a sectional view along B-B shown in Fig. 6.

### Detailed Description of the Invention

Exemplary modes of realization are illustrated in the accompanying drawings and will be described in detail herein. When the following description refers to the accompanying drawings, the same numerals in different drawings refer to the same or similar elements unless otherwise indicated. The modes of realization described in the following exemplary embodiments do not represent all embodiments consistent with the present invention. Rather, they are merely examples of devices consistent with some aspects of the present invention as set forth in detail in the appended claims.

Unless otherwise defined, the technical terms or scientific terms used in the present application shall have the ordinary meanings understood by those skilled in the art to which the present invention belongs. Words like "a" or "one" used in the specification and claims of the present application do not indicate a limitation of quantity, but mean that there is at least one. "Include" or "comprise" and similar words mean that the elements or items listed before "include" or "comprise" include the elements or items listed after "include" or "comprise" and their equivalents, and do not exclude other elements or items. Words such as "connect" or "connected" are not limited to physical or mechanical connections, but may include electrical connections, whether direct or indirect. As used in the specification and the appended claims of the present application, the singular forms "a," "said," and "the" are also intended to include the plural forms unless the context clearly dictates otherwise. It should also be understood that the term "and/or" as used herein refers to and includes any and all possible combinations of one or more of the associated listed items.

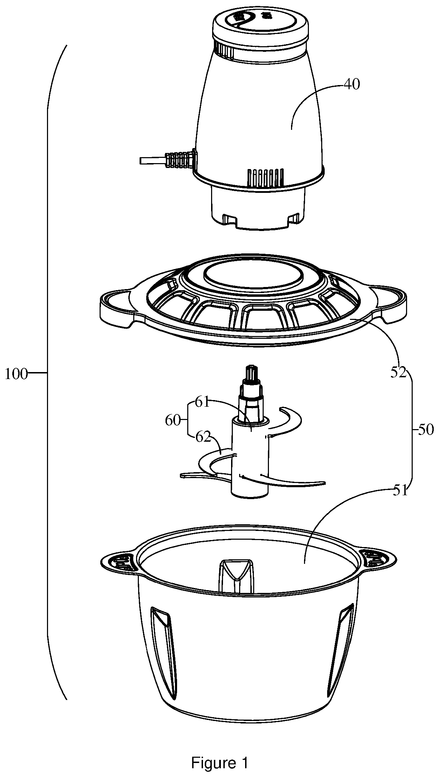

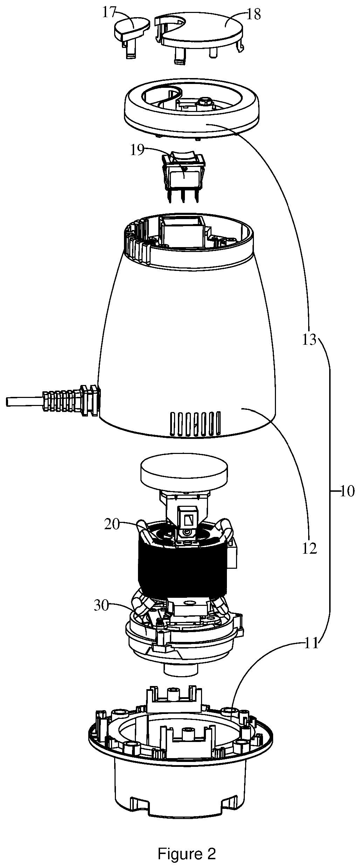

In reference to Figs. 1 to 7, a food processor 100 comprises a food container 50, a main unit 40, and a rotating tool assembly 60, which is a blending knife assembly in the illustrated embodiment. The food container 60 comprises a container body 51 and a container cover 52 covering the container body 51. The food container 50 is used for accommodating a food material to be processed, such as meat. The food material is cut and smashed inside the food container 50. The blending knife assembly 60 is mounted inside the container body 51 and comprises a knife shaft 61 and blades 62 provided on the knife shaft 61.

The main unit 40 is arranged on the container cover 52. The main unit 40 comprises a housing 10, a motor 20, a speed-changing device 30, a switch 19 for commanding forward and backward rotation, a forward rotation button 18, and a backward rotation button 17. The motor 20 is arranged inside the housing 10 and comprises a motor shaft. The forward rotation button 18 and the backward rotation button 17 respectively cooperate with the switch 19 for commanding forward and backward rotation. By pressing on the forward rotation button 18, the motor 20 is commanded to start to rotate forward. By pressing the backward rotation button 17, the motor 20 is commanded to start to rotate backward.

The housing 10 comprises a lower housing 11, an upper housing 12 covering the lower housing 11, and a cover body 13 arranged on the upper housing 12. In an embodiment, during assembly, first, the speed-changing device 30 is fixed to the motor 20, then, the motor 20 and the speed-changing device 30 are mounted into the lower housing 11 as a whole, and then, the upper housing 12 is fixed to the lower housing 11. The switch 19 for commanding forward and backward rotation is arranged inside the upper housing 12. The forward rotation button 18 and the backward rotation button 17 are arranged on the cover body 13.

The speed-changing device 30 is arranged inside the housing 10. The speed-changing device 30 comprises an input frame 31, a shifting element 32, a high-speed driving component 33, a low-speed driving component 34, and a gear assembly 35. The motor shaft drives the input frame 31 to rotate forward or backward. The shifting element 32 is movable by means of a lifting mechanism 36 between a first position and a second position where it is respectively engaged with the input frame 31. The gear assembly 35 comprises a gear ring 354, an output carrier 351, a first sun gear 352, and a first planet gear 353 arranged on the output carrier 351. The high-speed driving component 33 cooperates with the output carrier 351. The first sun gear 352 is fixed to the bottom end of the low-speed driving component 34. The first planet gear 353 is engaged with the first sun gear 352 and the gear ring 354. The blending knife assembly 60 is connected with the output carrier 351.

When the input frame 31 rotates forward, the shifting element 32 moves by means of the lifting mechanism 36 and under the effect of centrifugal force to the first position where it engages with the high-speed driving component 33, and the output frame 351 is driven to rotate via the high-speed driving component 33. When the input frame 31 rotates backward, the shifting element 32 moves by means of the lifting mechanism 36 and under the effect of centrifugal force to the second position where it engages with the low-speed driving component 34, and the first sun gear 352 is driven to rotate via the low-speed driving component 34, thereby causing the output frame 351 to rotate together with the first planet gear 353. In an embodiment, to "rotate forward" herein means to rotate clockwise, and to "rotate backward" means to rotate counter-clockwise. In another embodiment, to "rotate forward" herein means to rotate counter-clockwise, and to "rotate backward" means to rotate clockwise.

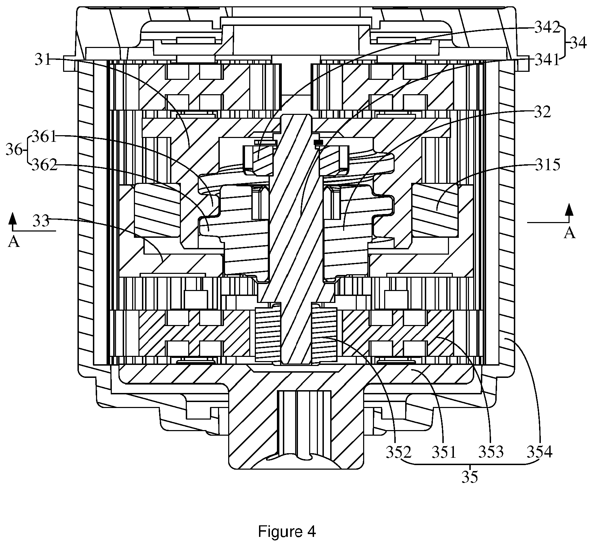

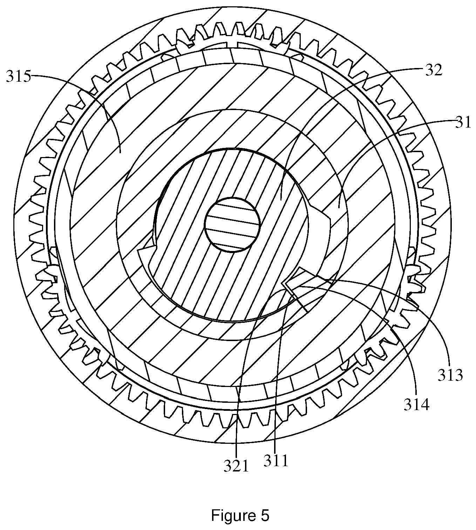

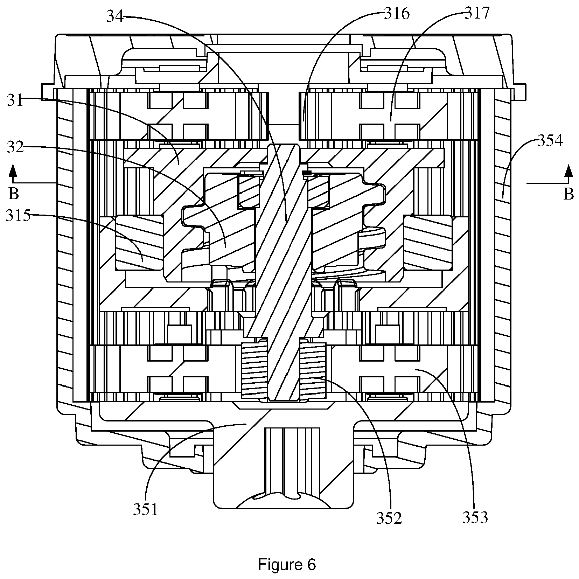

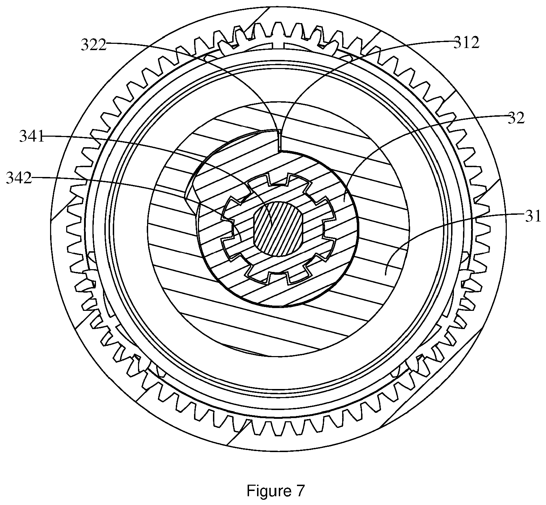

In reference to Figs. 4 and 5, when the input frame 31 rotates forward, the shifting element 32 is driven to descend by means of the lifting mechanism 36 under the effect of centrifugal force, until the shifting element 32 arrives at its first position where it is directly engaged with the high-speed driving component 33. At this moment, the shifting element 32 stops falling and rotates together with the input frame 31, the high-speed driving component 33 rotates together with the shifting element 32 and drives the output carrier 351 to rotate. At this moment, no speed reduction is performed by means of the gear assembly 35, and the output carrier 351 drives the blending knife assembly 60 to rotate at a high speed. In reference to Figs. 6 and 7, when the input frame 31 rotates backward, the shifting element 32 is driven to ascend by means of the lifting mechanism 36 under the effect of centrifugal force, until the shifting element 32 arrives at its second position where it is engaged with the low-speed driving component 34. At this moment, the shifting element 32 stops ascending and rotates together with the input frame 31, the low-speed driving component 34 rotates together with the shifting element 32 and drives the first sun gear 352 to rotate, so that the output carrier 351 rotates together with the first planet gear 353. At this moment, speed reduction is realized by means of the gear assembly 35, and the output carrier 351 drives the blending knife assembly 60 to rotate at a relatively low speed.

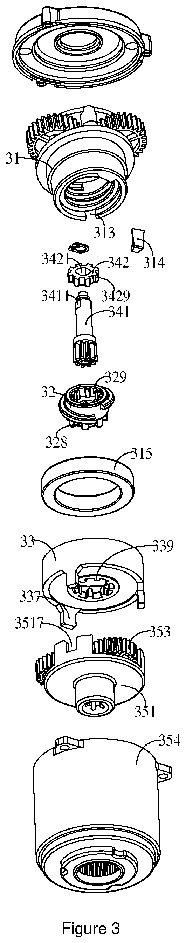

In another embodiment, when the input frame 31 rotates forward, the lifting mechanism 36 drives the shifting element 32 to ascend to its first position where it becomes engaged with the high-speed driving component 33, which drives the output carrier 351 to rotate. When the input frame 31 rotates backward, the lifting mechanism 36 drives the shifting element 33 descends by means of the lifting mechanism 36 to its second position where it becomes engaged with the low-speed driving component 34, which drives the first sun gear 352 to rotate, so that the output carrier 351 rotates together with the first planet gear 353. For example, the housing 10 of Fig. 3 may be placed upside down in a base of a food processor, which comprises a container body received by the base and a rotating tool assembly mounted inside the container body and connected to the output frame.

With the food processor 100 of the present invention, when the input frame 31 rotates forward, the output carrier 351 drives the blending knife assembly 60 to rotate at a high speed, at which moment a food material can be cut; when the input frame 31 rotates backward, the output carrier 351 drives the blending knife assembly 60 to rotate at a relatively low speed, at which moment a cut food material can be stirred or other functions such as making dough can be realized, so as to better meet user's needs. In addition, when the motor 20 rotates forward or backward, automatic switching between a high speed and a low speed can be achieved by means of the speed-changing device 30, so that the output speed is different when the motor rotates forward or backward. The present invention does not necessitate a control circuit or a control chip to achieve the switching between high and low speeds, and therefore does not call for redesigning a circuit. Thus, the invention is easier to implement, and has a lower overall cost.

In the illustrated embodiment, the lifting mechanism 36 comprises an inner screw thread 361 arranged on the inner side of the input frame 31 and an outer screw thread 362 arranged on the outer side of the shifting element 32, wherein the inner screw thread 361 cooperates with the outer screw thread 362. By the cooperation between the inner screw thread 361 and the outer screw thread 362, rotation of the input frame 31 can cause the shifting element 32 to ascend or descend, and the structure is simple and convenient to assemble.

When the input frame 31 starts to rotate forward, the shifting element 32 is already engaged with the low-speed driving component 34, and the low-speed driving component 34 limits the position of the shifting element 32 circumferentially so that the shifting element 32 can only descend and cannot rotate together with the input frame 31. When the input frame 31 starts to rotate backward, the shifting element 32 is already engaged with the high-speed driving component 33, and the high-speed driving component 33 limits the position of the shifting element 32 circumferentially so that the shifting element 32 can only ascend and cannot rotate together with the input frame 31.

The shifting element 32 comprises a high-speed stopper 321 arranged at one end of the outer screw thread 362 and a low-speed stopper 322 arranged at the other end of the outer screw thread 362, while the input frame 31 comprises a high-speed stop surface 311 that correspondingly cooperates with the high-speed stopper 321 and a low-speed stop surface 312 that correspondingly cooperate with the low-speed stopper 322. When the input frame 31 rotates forward, the shifting element 32 descend s until the high-speed stopper 321 abuts against the high-speed stopper surface 311, at which moment the input frame 31 begins to drive the shifting element 32 to rotate forward together. When the input frame 31 rotates backward, the shifting element 32 ascends until the low-speed stopper 322 abuts against the low-speed stopper surface 312, at which moment the input frame 31 begins to drive the shifting element 32 to rotate backward together. In this way, the shifting element 32 is switched between ascending and descending, and between opposite rotating directions.

In the illustrated embodiment, the input frame 31 comprises a high-speed stopper groove 313 and a stopper block 314 arranged within the high-speed stopper groove 313, the high-speed stop surface 311 being provided on the stopper block 314. During assembly, first, the shifting element 32 is mounted into the input frame 31, then, the stopper block 314 is mounted into the high-speed stopper groove 313. Thus, assembly is more convenient.

The high-speed stopper groove 313 is shaped as a cone with a larger top and a smaller bottom, the shape of the stopper block 314 matching the shape of the high-speed stopper groove 313, wherein the stopper block 314 is mounted into the high-speed stopper groove 313 from the outer side of the input frame 31. Thus, the high-speed stopper groove 313 can limit the position of the stopper block 314 in the vertical direction, preventing the stopper block 314 from detaching from the high-speed stopper groove 313 under the effect of gravity.

The input frame 31 comprises a bearing 315 arranged on the outer side of the stopper block 314. By means of the bearing 315, the position of the stopper block 314 can be limited from the outer side of the stopper block 314, and the structure of the input frame 31 is more stable and not prone to swinging.

In another embodiment, the lifting mechanism 36 comprises a spiral groove arranged on the inner side of the input frame 31 and a guide pin arranged on the outer side of the shifting element 32, wherein the guide pin can slide in the spiral groove. Alternatively, the lifting mechanism 36 comprises a guide pin arranged on the inner side of the input frame 31 and a spiral groove arranged on the outer side of the shifting element 32, wherein the guide pin can slide in the spiral groove. By the cooperation between the guide pin and the groove, rotation of the input frame 31 can cause the shifting element 32 to ascend or descend, and the structure is simple and convenient to assemble.

In the illustrated embodiment, the low-speed driving component 34 comprises a rotating shaft 341 and a low-speed driving block 342, the first sun gear 352 being fixed to the bottom end of the rotating shaft 341, and the low-speed driving block 342 being fixed to the top end of the rotating shaft 341. Thus, the rotating shaft 341 and the low-speed driving block 342 are manufactured separately and then assembled together, which facilitates its manufacturing. In another embodiment, the rotating shaft 341 and the low-speed driving block 342 are integrally formed.

The top end of the rotating shaft 341 is provided with a flat portion 3411, and the low-speed driving block 342 is provided with a flat hole 3421 that cooperates with the flat portion 3411. By the cooperation between the flat portion 3411 and the flat hole 3421, the cooperation between the rotating shaft 341 and the low-speed driving block 342 is more stable, with no risk of relative rotation there between.

The low-speed driving block 342 comprises a low-speed driving protrusion 3429, and the shifting element 32 comprises a low-speed driving groove 329 corresponding to the low-speed driving protrusion 3429, wherein the shifting element 32 and the low-speed driving block 342 are engaged with each other through the cooperation of the low-speed driving protrusion 3429 and the low-speed driving groove 329. By the cooperation of the low-speed driving protrusion 3429 and the low-speed driving groove 329, the shifting element 32 and the low-speed driving block 342 can be engaged with each other more conveniently and stably. In the illustrated embodiment, without being limiting, the low-speed driving protrusion 3429 extends in the vertical direction, and the low-speed driving groove 329 passes throughout the shifting element 32 in the vertical direction.

The high-speed driving component 33 comprises a high-speed driving protrusion 339, and the shifting element 32 comprises a high-speed driving groove 328 corresponding to the high-speed driving protrusion 339, wherein the shifting element 32 and the high-speed driving component 33 are engaged with each other through the cooperation of the high-speed driving protrusion 339 and the high-speed driving groove 328. By the cooperation of the high-speed driving protrusion 339 and the high-speed driving groove 328, the shifting element 32 and the high-speed driving component 33 can be engaged with each other more conveniently and stably.

In the illustrated embodiment, the high-speed driving component 33 comprises a downward extending clamping portion 337, and the output frame 351 comprises a clamping slot 3517 corresponding to the clamping portion 337, wherein the clamping portion 337 and the clamping slot 3517 cooperate with each other so that the output frame 351 rotates together with the high-speed driving component 33. Thus, by the cooperation between the clamping portion 337 and the clamping slot 3517, the high-speed driving component 33 can drive the output carrier 351 to rotate together.

The input frame 31 is provided with a second sun gear 316 and a second planet gear 317, the second sun gear 316 being connected to the motor shaft, the second planet gear 317 being engaged with the second sun gear 316 and the gear ring 354, and the gear shaft of the second planet gear 317 being fixed to the input frame 31. By providing the second sun gear 316 and the second planet gear 317, the speed of the motor shaft of the motor 20 is reduced and then transmitted to the input frame 31.

What have been described above are merely preferred embodiments of the present invention, and are not intended to limit the present invention whose scope is defined by the appended claims.

## Claims

1. A main unit of food processor, **characterized in that** it comprises:
- a housing (10);
- a motor (20) arranged inside the housing (10) and comprising a motor shaft; and
- a speed-changing device (30) arranged inside the housing (10) and comprising an input frame (31), a shifting element (32), a high-speed driving component (33), a low-speed driving component (34), and a gear assembly (35);
the motor shaft driving the input frame (31) to rotate forward or backward,
the shifting element (32) being movable by means of a lifting mechanism (36) between a first position and a second position where it is respectively engaged with the input frame (31);
the gear assembly (35) comprising a gear ring (354), an output carrier (351), a first sun gear (352), and a first planet gear (353) arranged on the output carrier (351);
the high-speed driving component (33) being engaged with the output carrier (351),
the first sun gear (352) being fixed to the bottom end of the low-speed driving component (34), the first planet gear (353) being engaged with the first sun gear (352) and the gear ring (354);
wherein, when the input frame (31) rotates forward, the shifting element (32) moves by means of the lifting mechanism (36) under the effect of centrifugal force to the first position where it engages with the high-speed driving component (33), and the high-speed driving component (33) drives the output frame (351) to rotate; when the input frame (31) rotates backward, the shifting element (32) moves by means of the lifting mechanism (36) under the effect of centrifugal force to the second position where it engages with the low-speed driving component (34), and the low-speed driving component (34) drives the first sun gear (352) to rotate, thereby causing the output frame (351) to rotate together with the first planet gear (353).

2. The main unit according to claim 1, **characterized in that** the lifting mechanism (36) comprises an inner screw thread (361) arranged on the inner side of the input frame (31) and an outer screw thread (362) arranged on the outer side of the shifting element (32), wherein the inner screw thread (361) cooperates with the outer screw thread (362).

3. The main unit according to claim 2, **characterized in that** the shifting element (32) comprises a high-speed stopper (321) arranged at one end of the outer screw thread (362) and a low-speed stopper (322) arranged at the other end of the outer screw thread (362), while the input frame (31) comprises a high-speed stop surface (311) that correspondingly cooperates with the high-speed stopper (321) and a low-speed stop surface (312) that correspondingly cooperates with the low-speed stopper (322).

4. The main unit according to claim 3, **characterized in that** the input frame (31) comprises a high-speed stopper groove (313) and a stopper block (314) arranged within the high-speed stopper groove (313), the high-speed stop surface (311) being provided on the stopper block (314).

5. The main unit according to claim 4, **characterized in that** the high-speed stopper groove (313) is shaped as a cone with a larger top and a smaller bottom, the shape of the stopper block (314) matching the shape of the high-speed stopper groove (313), wherein the stopper block (314) is mounted into the high-speed stopper groove (313) from the outer side of the input frame (31).

6. The main unit according to claim 5, **characterized in that** the input frame (31) comprises a bearing (315) arranged on the outer side of the stopper block (314).

7. The main unit according to any one of claims 1 to 6, **characterized in that** the lifting mechanism (36) comprises a spiral groove arranged on the inner side of the input frame (31) and a guide pin arranged on the outer side of the shifting element (32), wherein the guide pin can slide in the spiral groove; alternatively, the lifting mechanism (36) comprises a guide pin arranged on the inner side of the input frame (31) and a spiral groove arranged on the outer side of the shifting element (32), wherein the guide pin can slide in the spiral groove.

8. The main unit according to any one of claims 1 to 7, **characterized in that** the low-speed driving component (34) comprises a rotating shaft (341) and a low-speed driving block (342), the first sun gear (352) being fixed to the bottom end of the rotating shaft (341), and the low-speed driving block (342) being fixed to the top end of the rotating shaft (341).

9. The main unit according to claim 8, **characterized in that** the top of the rotating shaft (341) comprises a flat portion (3411), and the low-speed driving block (342) comprises a flat hole (3421) that cooperates with the flat portion (3411).

10. The main unit according to claim 8 or 9, **characterized in that** the low-speed driving block (342) comprises a low-speed driving protrusion (3429), and the shifting element (32) comprises a low-speed driving groove (329) corresponding to the low-speed driving protrusion (3429), wherein the shifting element (32) and the low-speed driving block (342) are engaged through the cooperation of the low-speed driving protrusion (3429) and the low-speed driving groove (329).

11. The main unit according to any one of claims 1 to 10, **characterized in that** the high-speed driving component (33) comprises a high-speed driving protrusion (339), and the shifting element (32) comprises a high-speed driving groove (328) corresponding to the high-speed driving protrusion (339), wherein the shifting element (32) and the high-speed driving component (33) are engaged through the cooperation of the high-speed driving protrusion (339) and the high-speed driving groove (328).

12. The main unit according to any one of claims 1 to 11, **characterized in that** the high-speed driving component (33) comprises a downward extending clamping portion (337), and the output frame (351) comprises a clamping slot (3517) corresponding to the clamping portion (337), the clamping portion (337) and the clamping slot (3517) cooperating with each other so that the output frame (351) rotates together with the high-speed driving component (33).

13. The main unit according to any one of claims 1 to 12, **characterized in that** the input frame (31) is provided with a second sun gear (316) and a second planet gear (317), the second sun gear (316) being connected to the motor shaft, the second planet gear (317) being engaged with the second sun gear (316) and the gear ring (354), and the gear shaft of the second planet gear (317) being fixed to the input frame (31).

14. A food processor, **characterized in that** it comprises:
- a food container (50), comprising a container body (51) and a container cover (52) covering the container body (51);
- the main unit (40) according to any one of claims 1 to 13, arranged on the container cover (52); and
- a rotating tool assembly (60) mounted inside the container body (51) and connected to the output frame (351).

15. A food processor, **characterized in that** it comprises:
- a base receiving a container body (51), and
- a container cover (52) covering the container body (51);
- the main unit (40) according to any one of claims 1 to 13, arranged in the base; and
- a rotating tool assembly (60) mounted inside the container body (51) and connected to the output frame (351).

## Patentansprüche

1. Haupteinheit einer Lebensmittelverarbeitungsmaschine, **dadurch gekennzeichnet, dass** sie umfasst:
- ein Gehäuse (10),
- einen Motor (20), der im Inneren des Gehäuses (10) angeordnet ist und eine Motorwelle umfasst; und
- eine Drehzahländerungsvorrichtung (30), die im Inneren des Gehäuses (10) angeordnet ist und einen Eingangsrahmen (31), ein Schaltelement (32), eine Hochdrehzahlantriebskomponente (33), eine Niedrigdrehzahlantriebskomponente (34) und eine Getriebeanordnung (35) umfasst;
wobei die Motorwelle den Eingangsrahmen (31) so antreibt, dass er sich vorwärts oder rückwärts dreht,
wobei das Schaltelement (32) mittels eines Hubmechanismus (36) bewegbar ist zwischen einer ersten Position und einer zweiten Position, in denen es jeweils mit dem Eingangsrahmen (31) im Eingriff steht;
wobei die Getriebeanordnung (35) einen Zahnkranz (354), einen Ausgangsträger (351), ein erstes Sonnenrad (352) und ein erstes Planetenrad (353), die auf dem Ausgangsträger (351) angeordnet sind, umfasst;
wobei die Hochdrehzahlantriebskomponente (33) mit dem Ausgangsträger (351) im Eingriff steht,
wobei das erste Sonnenrad (352) am unteren Ende der Niedrigdrehzahlantriebskomponente (34) befestigt ist, das erste Planetenrad (353) mit dem ersten Sonnenrad (352) und dem Zahnkranz (354) im Eingriff steht;
wobei, wenn sich der Eingangsrahmen (31) vorwärts dreht, das Schaltelement (32) sich mittels des Hubmechanismus (36) unter der Wirkung der Zentrifugalkraft zu der ersten Position bewegt, wo es mit der Hochdrehzahlantriebskomponente (33) im Eingriff steht, und die Hochdrehzahlantriebskomponente (33) den Ausgangsträger (351) in Drehung versetzt; wenn sich der Eingangsrahmen (31) rückwärts dreht, das Schaltelement (32) sich mittels des Hubmechanismus (36) unter der Wirkung der Zentrifugalkraft zu der zweiten Position bewegt, wo es mit der Niedrigdrehzahlantriebskomponente (34) im Eingriff steht, und die Niedrigdrehzahlantriebskomponente (34) das erste Sonnenrad (352) in Drehung versetzt, wodurch der Ausgangsrahmen (351) veranlasst wird, sich zusammen mit dem ersten Planetenrad (353) zu drehen.

2. Haupteinheit nach Anspruch 1, **dadurch gekennzeichnet, dass** der Hubmechanismus (36) ein an der Innenseite des Eingangsrahmens (31) angeordnetes inneres Schraubgewinde (361) und ein an der Außenseite des Schaltelements (32) angeordnetes äußeres Schraubgewinde (362) umfasst, wobei das innere Schraubgewinde (361) mit dem äußeren Schraubgewinde (362) zusammenwirkt.

3. Haupteinheit nach Anspruch 2, **dadurch gekennzeichnet, dass** das Schaltelement (32) einen an einem Ende des äußeren Schraubgewindes (362) angeordneten Hochdrehzahlanschlag (321) und einen an dem anderen Ende des äußeren Schraubgewindes (362) angeordneten Niedrigdrehzahlanschlag (322) umfasst, während der Eingangsrahmen (31) eine Hochdrehzahlanschlagfläche (311), die entsprechend mit dem Hochdrehzahlanschlag (321) zusammenwirkt, und eine Niedrigdrehzahlanschlagfläche (312), die entsprechend mit dem Niedrigdrehzahlanschlag (322) zusammenwirkt, umfasst.

4. Haupteinheit nach Anspruch 3, **dadurch gekennzeichnet, dass** der Eingangsrahmen (31) eine Hochdrehzahlanschlagnut (313) und einen innerhalb der Hochdrehzahlanschlagnut (313) angeordneten Anschlagblock (314) umfasst, wobei die Hochdrehzahlanschlagfläche (311) an dem Anschlagblock (314) bereitgestellt ist.

5. Haupteinheit nach Anspruch 4, **dadurch gekennzeichnet, dass** die Hochdrehzahlanschlagnut (313) als ein Konus mit einer größeren Oberseite und einer kleineren Unterseite gebildet ist, wobei die Form des Anschlagblocks (314) mit der Form der Hochdrehzahlanschlagnut (313) zusammenpasst, wobei der Anschlagblock (314) von der Außenseite des Eingangsrahmens (31) her in die Hochdrehzahlanschlagnut (313) eingepasst ist.

6. Haupteinheit nach Anspruch 5, **dadurch gekennzeichnet, dass** der Eingangsrahmen (31) ein Lager (315) umfasst, das an der Außenseite des Anschlagblocks (314) angeordnet ist.

7. Haupteinheit nach einem der Ansprüche 1 bis 6, **dadurch gekennzeichnet, dass** der Hubmechanismus (36) eine an der Innenseite des Eingangsrahmens (31) angeordnete Spiralnut und einen an der Außenseite des Schaltelements (32) angeordneten Führungsstift umfasst, wobei der Führungsstift in der Spiralnut gleiten kann; wobei alternativ der Hubmechanismus (36) einen an der Innenseite des Eingangsrahmens (31) angeordneten Führungsstift und eine an der Außenseite des Schaltelements (32) angeordnete Spiralnut umfasst, wobei der Führungsstift in der Spiralnut gleiten kann.

8. Haupteinheit nach einem der Ansprüche 1 bis 7, **dadurch gekennzeichnet, dass** die Niedrigdrehzahlantriebskomponente (34) eine Drehwelle (341) und einen Niedrigdrehzahlantriebsblock (342) umfasst, wobei das erste Sonnenrad (352) an dem unteren Ende der Drehwelle (341) befestigt ist und der Niedrigdrehzahlantriebsblock (342) an dem oberen Ende der Drehwelle (341) befestigt ist.

9. Haupteinheit nach Anspruch 8, **dadurch gekennzeichnet, dass** das obere Ende der rotierenden Welle (341) einen flachen Abschnitt (3411) umfasst und der Niedrigdrehzahlantriebsblock (342) ein flaches Loch (3421) umfasst, das mit dem flachen Abschnitt (3411) zusammenwirkt.

10. Haupteinheit nach Anspruch 8 oder 9, **dadurch gekennzeichnet, dass** der Niedrigdrehzahlantriebsblock (342) einen Niedrigdrehzahlantriebsvorsprung (3429) umfasst und das Schaltelement (32) eine dem Niedrigdrehzahlantriebsvorsprung (3429) entsprechende Niedrigdrehzahlantriebsnut (329) umfasst, wobei das Schaltelement (32) und der Niedrigdrehzahlantriebsblock (342) durch das Zusammenwirken des Niedrigdrehzahlantriebsvorsprungs (3429) und der Niedrigdrehzahlantriebsnut (329) im Eingriff stehen.

11. Haupteinheit nach einem der Ansprüche 1 bis 10, **dadurch gekennzeichnet, dass** die Hochdrehzahlantriebskomponente (33) einen Hochdrehzahlantriebsvorsprung (339) umfasst und das Schaltelement (32) eine dem Hochdrehzahlantriebsvorsprung (339) entsprechende Hochdrehzahlantriebsnut (328) umfasst, wobei das Schaltelement (32) und die Hochdrehzahlantriebskomponente (33) durch das Zusammenwirken des Hochdrehzahlantriebsvorsprungs (339) und der Hochdrehzahlantriebsnut (328) im Eingriff stehen.

12. Haupteinheit nach einem der Ansprüche 1 bis 11, **dadurch gekennzeichnet, dass** die Hochdrehzahlantriebskomponente (33) einen sich nach unten erstreckenden Klemmabschnitt (337) umfasst und der Ausgangsrahmen (351) einen dem Klemmabschnitt (337) entsprechenden Klemmschlitz (3517) umfasst, wobei der Klemmabschnitt (337) und der Klemmschlitz (3517) so miteinander zusammenwirken, dass sich der Ausgangsrahmen (351) gemeinsam mit der Hochdrehzahlantriebskomponente (33) dreht.

13. Haupteinheit nach einem der Ansprüche 1 bis 12, **dadurch gekennzeichnet, dass** der Eingangsrahmen (31) mit einem zweiten Sonnenrad (316) und einem zweiten Planetenrad (317) versehen ist, wobei das zweite Sonnenrad (316) mit der Motorwelle verbunden ist, das zweite Planetenrad (317) mit dem zweiten Sonnenrad (316) und dem Zahnkranz (354) im Eingriff steht und die Zahnradwelle des zweiten Planetenrades (317) an dem Eingangsrahmen (31) befestigt ist.

14. Lebensmittelverarbeitungsmaschine, **dadurch gekennzeichnet, dass** sie umfasst:
- einen Lebensmittelbehälter (50), der einen Behälterkörper (51) und eine den Behälterkörper (51) bedeckende Behälterabdeckung (52) umfasst;
- die Haupteinheit (40) nach einem der Ansprüche 1 bis 13, die auf der Behälterabdeckung (52) angeordnet ist; und
- eine rotierende Werkzeuganordnung (60), die im Inneren des Behälterkörpers (51) montiert und mit dem Ausgangsrahmen (351) verbunden ist.

15. Lebensmittelverarbeitungsmaschine, **dadurch gekennzeichnet, dass** sie umfasst:
- eine Basis, die einen Behälterkörper (51) aufnimmt, und
- eine Behälterabdeckung (52), die den Behälterkörper (51) bedeckt;
- die Haupteinheit (40) nach einem der Ansprüche 1 bis 13, die in der Basis angeordnet ist; und
- eine rotierende Werkzeuganordnung (60), die im Inneren des Behälterkörpers (51) montiert und mit dem Ausgangsrahmen (351) verbunden ist.

## Revendications

1. Une unité principale de robot culinaire, **caractérisée en ce qu'**elle comprend :
- un boîtier (10) ;
- un moteur (20), agencé à l'intérieur du boîtier (10) et comprenant un arbre de moteur ; et
- un dispositif (30) de changement de vitesse, agencé à l'intérieur du boîtier (10) et comprenant un châssis d'entrée (31), un élément (32) de changement de vitesse, un composant (33) d'entraînement à vitesse élevée, un composant (34) d'entraînement à vitesse faible et un ensemble d'engrenages (35) ;
l'arbre de moteur entraînant le châssis d'entrée (31) en rotation vers l'avant ou vers l'arrière,
l'élément (32) de changement de vitesse étant mobile au moyen d'un mécanisme de levage (36) entre une première position et une deuxième position où il est respectivement en engagement avec le châssis d'entrée (31) ;
l'ensemble d'engrenages (35) comprenant une couronne dentée (354), un support de sortie (351), une première roue dentée solaire (352) et une première roue dentée planétaire (353) agencées sur le support de sortie (351) ;
le composant (33) d'entraînement à vitesse élevée étant en engagement avec le support de sortie (351),
la première roue dentée solaire (352) étant fixée à l'extrémité inférieure du composant (34) d'entraînement à vitesse faible, la première roue dentée planétaire (353) étant en engagement avec la première roue dentée solaire (352) et avec la couronne dentée (354) ;
dans laquelle, lorsque le châssis d'entrée (31) tourne vers l'avant, l'élément (32) de changement de vitesse se déplace au moyen du mécanisme de levage (36), sous l'effet de la force centrifuge, vers la première position, dans laquelle il vient en engagement avec le composant (33) d'entraînement à vitesse élevée, et le composant (33) d'entraînement à vitesse élevée entraîne le châssis de sortie (351) en rotation ; lorsque le châssis d'entrée (31) tourne en sens inverse, l'élément (32) de changement de vitesse se déplace au moyen du mécanisme de levage (36), sous l'effet de la force centrifuge, vers la deuxième position, dans laquelle il vient en engagement avec le composant (34) d'entraînement à vitesse faible, et le composant (34) d'entraînement à vitesse faible entraîne la première roue dentée solaire (352) en rotation, amenant ainsi le châssis de sortie (351) à tourner avec la première roue dentée planétaire (353).

2. L'unité principale selon la revendication 1, **caractérisée en ce que** le mécanisme de levage (36) comprend un filetage intérieur (361) aménagé sur la face intérieure du châssis d'entrée (31) et un filetage extérieur (362) aménagé sur la face extérieure de l'élément (32) de changement de vitesse, le filetage intérieur (361) coopérant avec le filetage extérieur (362).

3. L'unité principale selon la revendication 2, **caractérisée en ce que** l'élément (32) de changement de vitesse comprend une butée de vitesse élevée (321) aménagée à une extrémité du filetage extérieur (362) et une butée de vitesse faible (322) aménagée à l'autre extrémité du filetage extérieur (362), tandis que le châssis d'entrée (31) comprend une surface d'arrêt de vitesse élevée (311) qui coopère de manière correspondante avec la butée de vitesse élevée (321) et une surface d'arrêt de vitesse faible (312) qui coopère de manière correspondante avec la butée de vitesse faible (322).

4. L'unité principale selon la revendication 3, **caractérisée en ce que** le châssis d'entrée (31) comprend une rainure de butée de vitesse élevée (313) et un bloc de butée (314) agencé à l'intérieur de la rainure de butée de vitesse élevée (313), la surface d'arrêt de vitesse élevée (311) étant prévue sur le bloc de butée (314).

5. L'unité principale selon la revendication 4, **caractérisée en ce que** la rainure de butée de vitesse élevée (313) a la forme d'un cône dont le sommet est plus large que la base, la forme du bloc de butée (314) correspondant à celle de la rainure de butée de vitesse élevée (313), le bloc de butée (314) étant monté dans la rainure d'arrêt à vitesse élevée (313) depuis le côté extérieur du châssis d'entrée (31).

6. L'unité principale selon la revendication 5, **caractérisée en ce que** le châssis d'entrée (31) comprend un palier (315) agencé sur le côté extérieur du bloc de butée (314).

7. L'unité principale selon l'une quelconque des revendications 1 à 6, **caractérisée en ce que** le mécanisme de levage (36) comprend une rainure hélicoïdale agencée sur le côté intérieur du châssis d'entrée (31) et une goupille de guidage agencée sur le côté extérieur de l'élément de déplacement (32), la goupille de guidage étant apte à coulisser dans la rainure hélicoïdale ; alternativement, le mécanisme de levage (36) comprend une goupille de guidage agencée sur le côté intérieur du châssis d'entrée (31) et une rainure hélicoïdale agencée sur le côté extérieur de l'élément de déplacement (32), la goupille de guidage étant apte à coulisser dans la rainure hélicoïdale.

8. L'unité principale selon l'une quelconque des revendications 1 à 7, **caractérisée en ce que** le composant (34) d'entraînement à vitesse faible comprend un arbre rotatif (341) et un bloc d'entraînement à vitesse faible (342), le premier pignon solaire (352) étant fixé à l'extrémité inférieure de l'arbre rotatif (341), et le bloc d'entraînement à vitesse faible (342) étant fixé à l'extrémité supérieure de l'arbre rotatif (341).

9. L'unité principale selon la revendication 8, **caractérisée en ce que** l'extrémité supérieure de l'arbre rotatif (341) comprend une partie plate (3411), et le bloc d'entraînement à vitesse faible (342) comprend un trou plat (3421) qui coopère avec la partie plate (3411).

10. L'unité principale selon la revendication 8 ou la revendication 9, **caractérisée en ce que** le bloc d'entraînement à vitesse faible (342) comprend une saillie d'entraînement à vitesse faible (3429), et l'élément (32) de changement de vitesse comprend une rainure d'entraînement à vitesse faible (329) correspondant à la saillie d'entraînement à vitesse faible (3429), l'élément (32) de changement de vitesse et le bloc d'entraînement à vitesse faible (342) étant en engagement grâce à la coopération entre la saillie d'entraînement à vitesse faible (3429) et la rainure d'entraînement à vitesse faible (329).

11. L'unité principale selon l'une quelconque des revendications 1 à 10, **caractérisée en ce que** le composant (33) d'entraînement à vitesse élevée comprend une saillie d'entraînement à vitesse élevée (339), et l'élément (32) de changement de vitesse comprend une rainure d'entraînement à vitesse élevée (328) correspondant à la saillie d'entraînement à vitesse élevée (339), dans laquelle l'élément (32) de changement de vitesse et le composant (33) d'entraînement à vitesse élevée sont en engagement grâce à la coopération de la saillie d'entraînement à vitesse élevée (339) et de la rainure d'entraînement à vitesse élevée (328).

12. L'unité principale selon l'une quelconque des revendications 1 à 11, **caractérisée en ce que** le composant (33) d'entraînement à vitesse élevée comprend une partie de serrage s'étendant vers le bas (337), et le châssis de sortie (351) comprend une fente de serrage (3517) correspondant à la partie de serrage (337), la partie de serrage (337) et la fente de serrage (3517) coopérant l'une avec l'autre de telle sorte que le châssis de sortie (351) tourne avec le composant (33) d'entraînement à vitesse élevée.

13. L'unité principale selon l'une quelconque des revendications 1 à 12, **caractérisée en ce que** le châssis d'entrée (31) est muni d'une deuxième roue dentée solaire (316) et d'une deuxième roue dentée planétaire (317), la deuxième roue dentée solaire (316) étant reliée à l'arbre du moteur, la deuxième roue dentée planétaire (317) étant en engagement avec la deuxième roue dentée solaire (316) et avec la couronne dentée (354), et l'arbre d'engrenage de la deuxième roue dentée planétaire (317) étant fixé au châssis d'entrée (31).

14. Un robot culinaire, **caractérisé en ce qu'**il comprend :
- un récipient à nourriture (50), comprenant un corps de récipient (51) et un couvercle de récipient (52) recouvrant le corps de récipient (51) ;
- l'unité principale (40) selon l'une quelconque des revendications 1 à 13, agencée sur le couvercle de récipient (52) ; et
- un ensemble (60) d'outils rotatifs, monté à l'intérieur du corps de récipient (51) et relié au châssis de sortie (351).

15. Un robot culinaire, **caractérisé en ce qu'**il comprend :
- une base recevant un corps de récipient (51), et
- un couvercle de récipient (52) recouvrant le corps de récipient (51) ;
- l'unité principale (40) selon l'une quelconque des revendications 1 à 13, agencée dans la base ; et
- un ensemble (60) d'outils rotatifs, monté à l'intérieur du corps de récipient (51) et relié au châssis de sortie (351).
